# EUROPÄISCHE PATENTSCHRIFT

(11) **EP 2 870 036 B1**
(45) Veröffentlichungstag und Bekanntmachung des Hinweises auf die Patenterteilung: **27.07.2016**
(21) Anmeldenummer: 13741977.6
(22) Anmeldetag: 28.06.2013
(51) Int. Cl.: B60R 21/231, B60R 21/21, B60R 21/00, B60R 21/2346

(54) **GASSACK FÜR EIN FAHRZEUGINSASSEN-RÜCKHALTESYSTEM**
AIRBAG FOR A VEHICLE OCCUPANT RESTRAINING SYSTEM
AIRBAG POUR UN SYSTÈME DE RETENUE POUR OCCUPANT D'UN VÉHICULE

(30) Priorität: 04.07.2012 DE 102012211654
(43) Veröffentlichungstag der Anmeldung: 13.05.2015
(73) Patentinhaber: Takata AG, 63743 Aschaffenburg (DE)
(72) Erfinder: FELLER, Jens, 89171 Illerkirchberg (DE)
(74) Vertreter: Maikowski & Ninnemann Patentanwälte Partnerschaft mbB
(86) Internationale Anmeldenummer: PCT/EP2013/063668
(87) Internationale Veröffentlichungsnummer: WO 2014/005946

(56) Entgegenhaltungen:
- DE-A1-102007 059 578
- DE-A1-102009 019 930
- GB-A- 2 419 116

## Beschreibung

Die Erfindung betrifft einen Gassack für ein Fahrzeuginsassen-Rückhaltesystem nach Anspruch 1.

Aus dem Stand der Technik sind Gassäcke bekannt, die zum Schutz sowohl der Thoraxregion als auch der Kopfregion eines Fahrzeuginsassen ausgebildet sind (Kopf-Thorax-Gassäcke). Beispielsweise beschreiben die DE 10 2007 059 578 A1, die DE 10 2009 019 930 A1 und die GB 2 419 116 A Kopf-Thorax-Gassäcke.

Der vorliegenden Erfindung liegt das Problem zugrunde, einen Kopf-Thorax-Gassack zu schaffen, der einen möglichst guten Schutz des Kopfes des Fahrzeuginsassen bereitstellt.

Dieses Problem wird durch die Schaffung eines Gassacks mit den Merkmalen gemäß Anspruch 1 gelöst. Weiterbildungen der Erfindung sind in den abhängigen Ansprüchen angegeben.

Danach wird ein Gassack für ein Fahrzeuginsassen-Rückhaltesystem bereitgestellt, mit
- einer Thoraxkammer zum Schutz der Thoraxregion des Fahrzeuginsassen;
- einer Kopfkammer zum Schutz des Kopfes des Fahrzeuginsassen, wobei
- die Thoraxkammer einen Positionierabschnitt aufweist, über den Gas aus der Thoraxkammer in die Kopfkammer überströmen kann, wobei
- der Positionierabschnitt so ausgebildet und angeordnet ist, dass er bei einem Aufblasen des Gassacks vor der Kopfkammer mit Gas befüllt wird und sich so entfaltet, dass er die Kopfkammer an etwaigen Hindernissen vorbei in eine Schutzposition bewegen kann, und wobei
- die Kopfkammer durch eine erste und eine zweite äußere Gassacklage begrenzt ist und der Positionierabschnitt durch eine dieser äußeren Gassacklagen der Kopfkammer und eine zusätzliche innere Gassacklage begrenzt ist.

Dadurch, dass das Befüllen des Positionierabschnitts der Thoraxkammer vor dem Befüllen der Kopfkammer beginnt, wird die Kopfkammer beim Aufblasen des Gassacks in weniger befülltem bzw. gar nicht befülltem Zustand von dem sich entfaltenden Positionierabschnitt mitgenommen und kann aufgrund ihres zu diesem Zeitpunkt noch geringen Volumens an möglicherweise vorhandenen Hindernissen vorbei in ihre vorgesehene Schutzposition gebracht werden. Nach erfolgter Positionierung gelangt weiter Gas in die Kopfkammer, so dass sich diese zu Ihrer vorgesehenen Größe entfaltet.

Insbesondere ist es auf diese Weise möglich, die Kopfkammer an in Prinzip beliebigen Hindernissen vorbei zu positionieren. Beispielsweise handelt es sich bei dem "Hindernis" um ein Teil einer Fahrzeugseite oder um einen Fahrzeuginsassen, der sich "out-ofposition" befindet, d.h. außerhalb der vorgesehenen Sitzposition. Denkbar ist insbesondere, dass die Kopfkammer an geradlinigen, gekrümmten (z.B. S-förmigen) Hindernissen vorbei positioniert werden kann.

Beispielsweise erstreckt sich der Positionierabschnitt der Thoraxkammer in die Kopfkammer hinein, so dass die Kopfkammer den Positionierabschnitt (d.h. das aufblasbare Volumen des Positionierabschnitts) zumindest teilweise umgibt. Denkbar ist allerdings auch, dass der Positionierabschnitt an die Kopfkammer lediglich angrenzt, wobei der Positionierabschnitt z.B. an der Kopfkammer (insbesondere über eine Naht) fixiert sein kann. Möglich ist hier, dass eine Gassacklage gleichzeitig die Kopfkammer und das aufblasbare Volumen des Positionierabschnitts begrenzt.

Gemäß einer anderen Weiterbildung der Erfindung weist der Positionierabschnitt im Bereich der Kopfkammer mindestens eine Überströmöffnung auf, über die Gas aus der Thorax- in die Kopfkammer übertreten kann. Die Überströmöffnung (bzw. die mehreren Überströmöffnungen) ist (sind) insbesondere so angeordnet, dass ein gezieltes Einströmen aus dem Positionierabschnitt in die Kopfkammer erfolgt, um eine gezielte (insbesondere gerichtete) Entfaltung der Kopfkammer zu erzeugen.

Der Positionierabschnitt kann zusammen mit der Überströmöffnung als Kaskadendrossel angesehen werden, wobei eine erste Drosselung insbesondere über einen im Vergleich mit der übrigen Thoraxkammer reduzierten Querschnitt des Positionierabschnitts und eine zweite Drosselung durch die Überströmöffnung erfolgt. Insbesondere bewirkt die Drosselung das erwähnte verzögerte Befüllen der Kopfkammer (abhängig von Querschnitt und Läge des Positionierabschnitts und dem Querschnitt und der Anzahl der Überströmöffnungen), so dass die Kopfkammer beim Entfalten des Positionierabschnitts zunächst insbesondere im Wesentlichen drucklos bleibt und sich langsamer entfaltet als die Thoraxkammer und deren Positionierabschnitt.

Denkbar ist, dass zumindest eine Überströmöffnung so angeordnet ist, dass sie beim Auftreffen des Fahrzeuginsassen auf den Gassack abhängig von dessen Körpergröße zumindest teilweise abgedrückt wird. Beispielsweise erfolgt nur bei einem großen Fahrzeuginsassen, der eine vorgebbare Mindestkörpergröße überschreitet, ein Abdrücken der Überströmöffnung.

Möglich ist auch, dass der Positionierfinger eine Art Rückschlagventil realisiert, wobei sich der Querschnitt des Positionierabschnitts reduziert, wenn der Druck in der Kopfkammer größer ist als in der Thoraxkammer, d. h. in dem Positionierabschnitt. In diesem Fall wird einem Rückströmen von Gas aus der Kopfkammer über den Positionierabschnitt entgegengewirkt bzw. ein Rückströmen verhindert. Dies ist beispielsweise sinnvoll, um auch in einer Rückprallphase des Thoraxbereichs (oder des gesamten Torsos) des Fahrzeuginsassen einen ausreichenden Kopfrückhalt zu erzeugen. Es ist natürlich auch denkbar, dass über die Überströmöffnung ein Rückströmen von Gas aus der Kopfin die Thoraxkammer erfolgt.

Der Positionierabschnitt grenzt insbesondere an einen Basisabschnitt der Thoraxkammer an, wobei in dem Basisabschnitt der Thoraxkammer ein Gasgenerator zum Aufblasen des Gassacks angeordnet ist. Der Basisabschnitt befindet sich insbesondere - bezogen auf den im Fahrzeug montierten Zustand des Gassacks - in Fahrzeughöhenrichtung betrachtet unterhalb des Positionierabschnitts. Beispielsweise ist der Positionierabschnitt als sich vom Basisabschnitt nach oben weg erstreckende Verjüngung der Thoraxkammer ausgebildet. In diesem Fall besitzt der Positionierabschnitt einen geringeren Querschnitt (z.B. in einer durch die Fahrzeuglängs- und Fahrzeugquerrichtung aufgespannten Ebene betrachtet) als der Basisabschnitt der Thoraxkammer.

Möglich ist darüber hinaus, dass der Positionierabschnitt eine im Wesentlichen längserstreckte Gestalt aufweist, d. h. er besitzt entlang einer Haupterstreckungsrichtung eine größere Ausdehnung als in einer Richtung quer dazu. Beispielsweise beträgt die Ausdehnung des Positionierabschnitts entlang der Haupterstreckungsrichtung mindestens das 1,5-Fache, das 2-Fache oder 3-Fache seiner maximalen Ausdehnung in einer Richtung quer zur Haupterstreckungsrichtung.

Gemäß einer anderen Ausgestaltung der Erfindung ist der Positionierabschnitt so ausgebildet (z.B. wie oben erwähnt längserstreckt), dass er im aufgeblasenen und im Fahrzeug montierten Zustand des Gassacks mit der Fahrzeughöhenrichtung einen Winkel zwischen 0° und 90°, insbesondere zwischen 0° und 45°, einschließt oder zumindest näherungsweise parallel zur Fahrzeughöhenrichtung orientiert ist.

Die innere Gassacklage weist beispielsweise eine Überströmöffnung auf. Möglich ist insbesondere auch, dass die Thoraxkammer ebenfalls durch zwei äußere Gassacklagen begrenzt ist, d.h. die Thoraxkammer erstreckt sich zwischen diesen beiden Gassacklagen, wobei z.B. die äußeren Lagen der Kopfkammer mit diesen äußeren Gassacklagen der Thoraxkammer verbunden sind. Darüber hinaus können die Thoraxkammer-Gassacklagen mit den äußeren Gassacklagen der Kopfkammer verbunden sein.

Denkbar ist auch, dass die innere Gassacklage, die den Positionierabschnitt der Thoraxkammer bildet, durch einen ersten Abschnitt einer Gassacklage gebildet ist, die mit einem zweiten Abschnitt eine der äußeren Gassacklagen bildet, die die Thoraxkammer begrenzen.

Möglich ist darüber hinaus, dass die innere Gassacklage über mindestens eine erste Naht mit der ersten äußeren Gassacklage der Kopfkammer und mit einer zweiten Naht mit der zweiten äußeren Gassacklage der Kopfkammer verbunden ist. Insbesondere definiert die erste Naht den Durchmesser und den Verlauf der Kontur des Positionierabschnitts. Die zweite Naht, die insbesondere - bezogen auf den im Fahrzeug eingebauten Zustand des Gassacks - in Fahrzeughöhenrichtung versetzt zu der ersten Naht angeordnet ist, bildet eine Art Fangband zwischen der ersten und der zweiten Naht aus, das zur Festlegung der Geometrie (insbesondere der Wirkdicke) der Kopfkammer dient.

In einer Ausgestaltung ist eine Überströmöffnung aus dem Positionierabschnitt in die Kopfkammer durch eine Unterbrechung der ersten Naht gebildet. Die Erfindung ist selbstverständlich nicht auf eine bestimmte Ausgestaltung der Überströmöffnung festgelegt. Eingesetzt werden können (z.B. auch in Kombination) im Prinzip sämtliche Arten von Überströmöffnungen, z.B. auch solche, die nach Art eines Rückschlagventils ausgestaltet sind.

Der erfindungsgemäße Gassack (z.B. seine Thorax- und/oder Kopfkammer) kann darüber hinaus mindestens eine Abströmöffnung aufweisen, über die Gas aus dem Gassack nach außen abströmen kann. Der Gassack kann auch mindestens eine weitere Überströmöffnung aufweisen, über die das Gas unmittelbar, d.h. nicht über den Positionierabschnitt, aus dem oben erwähnten Basisabschnitt der Thoraxkammer in die Kopfkammer überströmen kann.

Bei dem erfindungsgemäßen Gassack handelt es sich z.B. um einen Seitengassack, der in oder an einem Fahrzeugsitz oder an/in einer Fahrzeugtür angeordnet ist. Die Erfindung betrifft auch ein Gassackmodul mit dem oben beschriebenen Gassack sowie ein Fahrzeug mit einem derartigen Gassackmodul.

Die Erfindung wird im Folgenden anhand von Ausführungsbeispielen unter Bezugnahme auf die Figuren näher erläutert. Es zeigen:
- Fig. 1 bis 7: schematisch unterschiedliche Ausführungsformen des erfindungsgemäßen Gassacks;
- Fig. 8: eine schematische Schnittansicht des Gassacks aus Fig. 7;
- Fig. 9 bis 14: schematisch weitere Ausführungsformen des erfindungsgemäßen Gassacks;
- Fig. 15A: einen Gassack gemäß einem Ausführungsbeispiel der Erfindung;
- Fig. 15B: eine Schnittansicht des Gassacks aus Figur 15A;
- Fig. 16A: einen Gassack gemäß einem Ausführungsbeispiel der Erfindung;
- Fig. 16B: eine Schnittansicht des Gassack aus Figur 16A;
- Fig. 17A: einen Gassack gemäß einem Ausführungsbeispiel der Erfindung;
- Fig. 17B: eine Schnittansicht des Gassack aus Figur 17A;
- Fig. 18A: einen Gassack gemäß einem Ausführungsbeispiel der Erfindung;
- Fig. 18B: eine Schnittansicht des Gassack aus Figur 18A;
- Fig. 19A: einen Gassack gemäß einem Ausführungsbeispiel der Erfindung; und
- Fig. 19B: eine Schnittansicht des Gassack aus Figur 19A.

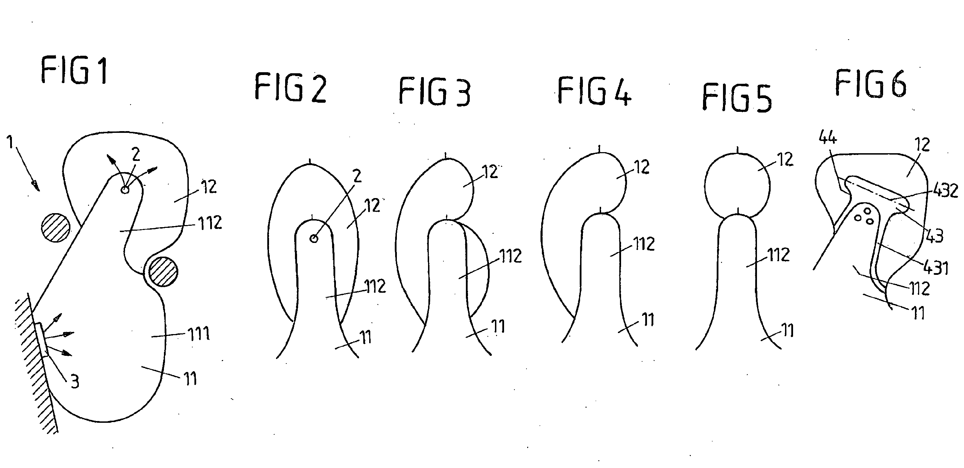

Der in Figur 1 dargestellte erfindungsgemäße Gassack 1 weist eine Thoraxkammer 11 sowie eine darüber befindliche Kopfkammer 12 auf. In der Thoraxkammer 11 befindet sich eine Gasgeneratoranordnung 3 (die einen Gasgenerator zum Erzeugen von Gas und z.B. einen Diffusor umfasst), aus der nach Auslösen Gas in die Thoraxkammer 11 einströmt.

Die Thoraxkammer 11 umfasst einen Basisabschnitt 111, in dem die Gasgeneratoranordnung 3 angeordnet ist und der sich nach oben in einen Positionierabschnitt 112 (Positionierfinger) verjüngt. Der Basisabschnitt 111 weist entsprechend einen größeren Querschnitt und somit ein größeres Volumen als der Positionierabschnitt 112 auf.

Der Positionierabschnitt 112 ragt (insbesondere in dem in Figur 1 dargestellten aufgeblasenen Zustand des Gassacks 1) in die Kopfkammer 12 hinein und weist in der Kopfkammer 12 eine Überströmöffnung 2 auf, über die Gas aus der Thoraxkammer 11, d.h. aus dem Positionierabschnitt 112, in die Kopfkammer 12 überströmen kann. Möglich ist natürlich, dass der Positionierabschnitt 112 mehr als eine Überströmöffnung aufweist.

Aufgrund des gegenüber dem Basisabschnitt 111 der Thoraxkammer 11 verringerten Querschnitts des Positionierabschnitts 112 und dem nochmals kleineren Querschnitt der Überströmöffnung 2 erfolgt eine stufenweise Drosselung des aus der Thoraxkammer 11 (aus ihrem Basisabschnitt 111) in die Kopfkammer 12 fließenden Gasstroms, so dass das Befüllen der Kopfkammer 12 verzögert nach dem Beginn des Befüllens des Basisabschnitts 111 und des Positionierabschnitts 112 erfolgt. Während des Befüllens des Positionierabschnitts 112 ist die Kopfkammer 12 somit noch im Wesentlichen drucklos, wobei der Positionierabschnitt 112 so angeordnet ist, dass er die Kopfkammer 12 in ihrem drucklosen (bzw. zumindest noch nicht voll befüllten) Zustand mitnimmt während er sich entfaltet und so die Kopfkammer 12 um Hindernisse herum in ihre vorgesehene Schutzposition befördert, bevor sich diese zu ihrer vollen Schutzgröße entfaltet.

Insbesondere weist die Kopfkammer 12 ein größeres Volumen als der Positionierabschnitt 112 auf, wobei die Kopfkammer 12 den Positionierabschnitt 112 auch vollständig umgeben kann.

Der Positionierabschnitt 112 im Beispiel der Figur 1 verläuft abgewinkelt in Bezug auf den Basisabschnitt 111; d.h. die Haupterstreckungsrichtung des Positionierabschnitts 112 schließt mit der Fahrzeughöhenrichtung einen Winkel insbesondere zwischen 0 und 45° (vorliegend ca. 45°) ein (bezogen auf den im Fahrzeug montierten Zustand des Gassacks 1). Die abgewinkelte Ausrichtung des Positionierabschnitts 112 kann vorteilhaft sein, um die Kopfkammer 12 möglichst sicher um etwaige Hindernisse (zum Beispiel Beastandteile einer Gurtvorrichtung) positionieren zu können.

Denkbar ist jedoch auch, wie in Figur 2 dargestellt, dass sich der Positionierabschnitt 112 im Wesentlichen in vertikaler Richtung (entlang der Fahrzeughöhenrichtung) erstreckt.

Die Kopfkammer 12 kann unterschiedliche Konfigurationen aufweisen; zum Beispiel kann sie (insbesondere mittels einer Naht) an dem Positionierabschnitt 112 festgelegt sein (Figur 3). Denkbar ist auch, dass sich der Positionierabschnitt 112 nicht innerhalb der Kopfkammer 12 erstreckt, sondern lediglich an diese angrenzt (Figuren 4 und 5), wobei entsprechend mindestens eine Überströmöffnung (hier nicht dargestellt) vorhanden ist, über die Gas aus dem Positionierabschnitt 112 in die Kopfkammer 12 abströmen kann.

Gemäß Fig. 6 kann der Positionierabschnitt 112 durch eine innere Gassacklage 43 (bzw. einen Abschnitt einer Gassacklage) gebildet ist, die größer ist als der Positionierabschnitt 112 selber. Beispielsweise definiert eine erste Naht 431 die Kontur (insbesondere den Durchmesser) des befüllbaren Volumens des Positionierabschnitts 112, wobei die erste Naht 431 die innere Lage 43 mit einer ersten äußeren Gassacklage, die die Kopfkammer 12 begrenzt, verbunden ist, während die zweite Naht 432 die innere Gassacklage 43 mit einer zweiten äußeren Gassacklage, die ebenfalls die Kopfkammer 12 begrenzt, verbunden ist. Zwischen der ersten und der zweiten Naht 431, 432 entsteht ein Verbindungsabschnitt 44 nach Art eines Fangbandes, der in diesem Bereich die Ausdehnung der Kopfkammer 12 beeinflusst.

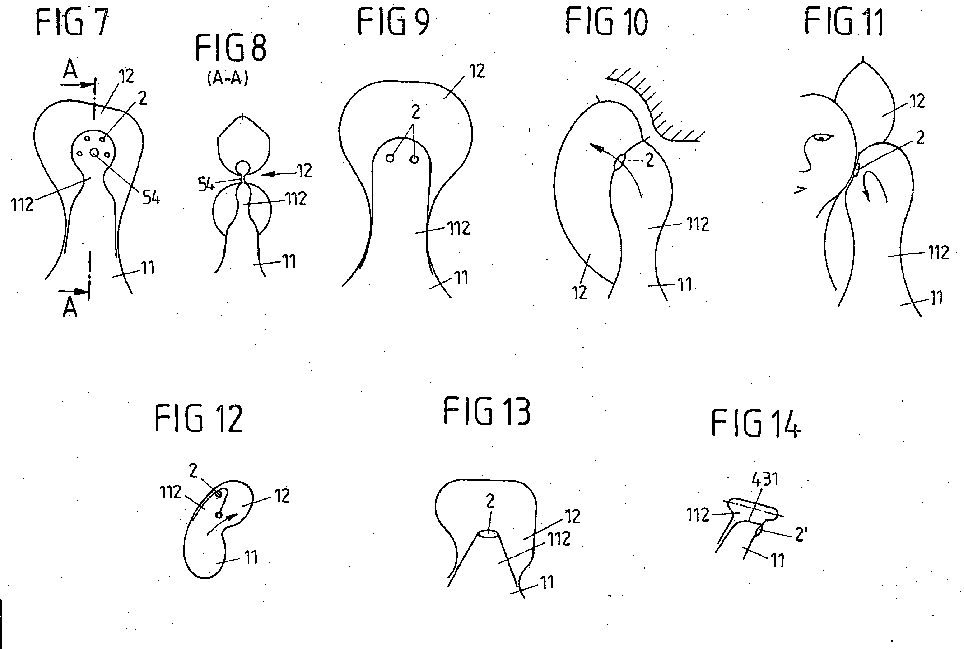

Der erfindungsgemäße Gassack gemäß Fig. 7 weist eine Mehrzahl von Überströmöffnungen auf, die entlang einer Kreislinie, die um einen mittigen Abnäher 54 herum verläuft, angeordnet sind. Der Abnäher 54 reduziert in diesem Bereich die Dicke der Kopfkammer 12, wie in der in Fig. 8 gezeigten Schnittansicht des Gassacks 1 zu erkennen.

In Bezug auf die Figur 7 (und entsprechend auch in Bezug auf Fig. 9), die ähnlich den Figuren 1 und 2 einen sich in die Kopfkammer 12 hinein erstreckenden Positionierabschnitt 112 zeigt, wird darauf hingewiesen, dass die Geometrie des Positionierabschnittes 112 natürlich im Prinzip frei wählbar ist und insbesondere an die Erfordernisse, etwa an das gewünschte Entfaltungsverhalten der Kopfkammer 12, angepasst werden kann. Insbesondere ist es denkbar, dass der Positionierabschnitt 112 eine im Wesentlichen längliche Form aufweist. Möglich ist jedoch auch, dass er zum Beispiel ein in der Kopfkammer 12 befindliches Ende aufweist, das gegenüber einem Abschnitt, der dem Basisabschnitt 111 der Thoraxkammer 11 zugewandt ist, verbreitert ist. Beispielsweise weist der Positionierabschnitt 112 nicht wie in Figur 9 gezeigt eine I-förmige Gestalt auf, sondern eine T-förmige Gestalt.

Möglich ist auch, dass der Positionierabschnitt 112 und/oder die mindestens eine Überströmöffnung 2 des Positionierabschnittes so angeordnet sind, dass bei einem Aufprall des Fahrzeuginsassen auf den Gassack der Positionierabschnitt 112 und/oder die Überströmöffnung 2 abgedrückt werden, so dass einem Überströmen von Gas in die Kopfkammer 12 entgegengewirkt oder ganz verhindert wird, um ein von der Körpergröße des Fahrzeuginsassen abhängiges (adaptives) Befüllen des Gassacks zu realisieren.

Denkbar ist auch, dass der Gassack 1 zusätzlich zu einer Überströmöffnung 2 des Positionierabschnittes 112 eine weitere Überströmöffnung 113 aufweist, über die Gas unmittelbar, d.h. ohne über den Positionierabschnitt 112 zu strömen, in die Kopfkammer 12 gelangen kann (Figur 12).

Wie in Figur 13 gezeigt, kann die Überströmöffnung 2 des Positionierabschnittes 112 auch nach oben weisen, d.h. die Überströmöffnung 2 ist nicht in einer den Positionierabschnitt 112 begrenzenden Gassacklage ausgebildet, sondern zwischen zwei Gassacklagen, die den Positionierabschnitt 112 ausbilden. Darüber hinaus ist es möglich, dass der Positionierabschnitt 112 anstelle oder zusätzlich zu einer Überströmöffnung 2 in Form einer Öffnung in einer Gassacklage eine Überströmöffnung aufweist, die durch eine Unterbrechung in einer Naht (z.B. Naht 431 in Fig. 6), über die die den Positionierabschnitt 112 ausbildenden Gassacklagen miteinander verbunden sind, realisiert ist. Dies ist in Fig. 14 gezeigt (durch eine Nahtunterbrechung ausgebildete Überströmöffnung 2').

Es ist auch möglich, dass die Thoraxkammer 11 und/oder die Kopfkammer 12 der oben beschriebenen erfindungsgemäßen Gassäcke eine Abströmöffnung (nicht dargestellt) aufweist, über die Gas aus der Thoraxkammer 11 bzw. aus der Kopfkammer 12 nach außen abströmen kann.

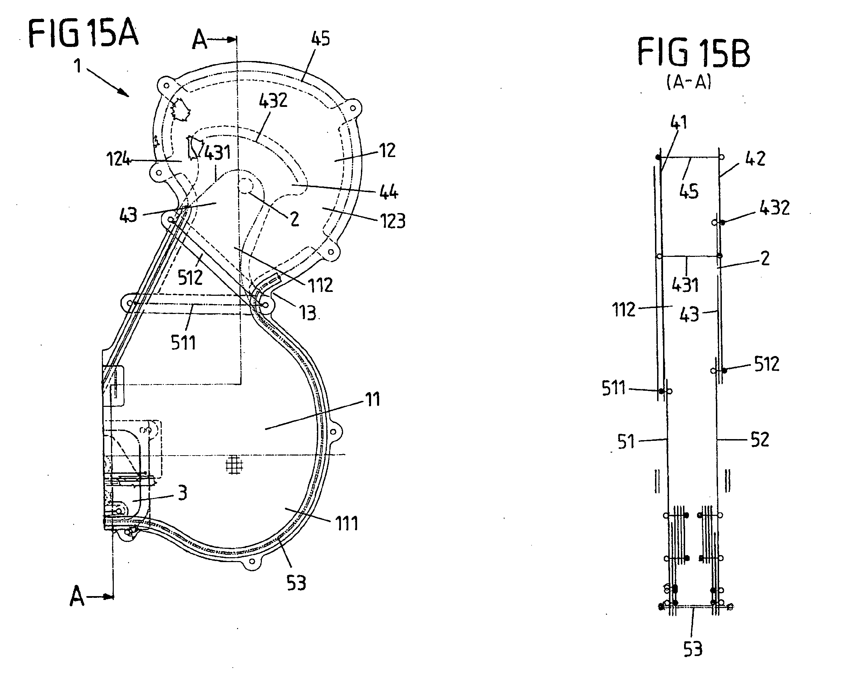

Die Figuren 15A und 15B (Schnitt A-A) beziehen sich auf einen erfindungsgemäßen Gassack 1, der ähnlich der schematischen Figur 1 ausgestaltet ist. Der Positionierabschnitt 112 der Thoraxkammer 11 ragt in die Kopfkammer 12 so hinein, dass sich im aufgeblasenen Zustand der Kopfkammer 12 ein erster Abschnitt 123 vor und ein zweiter Abschnitt 124 der Kopfkammer 12 - in Vorwärtsfahrtrichtung betrachtet - hinter dem Positionierabschnitt 112 befinden wird.

Die Kopfkammer 12 ist durch eine erste und eine zweite äußere Gassacklage 41, 42 begrenzt (vgl. Figur 15B), d.h. die Kopfkammer 12 erstreckt sich zwischen den Gassacklagen 41, 42. Die erste Gassacklage 41 ist darüber hinaus mit einer Schutzlage 411 versehen. Die Thoraxkammer 11 wird durch zwei äußere Thoraxkammer-Gassacklagen 51, 52 gebildet, die über Nähte 511, 512 mit den äußeren Gassacklagen 41, 42 der Kopfkammer 12 verbunden sind. Insbesondere begrenzen die Thorax-Gassacklagen 51, 52 den Basisabschnitt 111 der Thoraxkammer 11.

Der Positionierabschnitt 112 der Thoraxkammer 11 wird im Beispiel der Figuren 15A, 15B durch einen Abschnitt der ersten äußeren Gassacklage 41 der Kopfkammer 12 sowie durch eine zusätzliche innere Gassacklage 43 gebildet. Die innere Gassacklage 43 ist über eine gekrümmte erste Naht 431 (mit einem glockenartigen Verlauf) mit der ersten äußeren Gassacklage 41 verbunden, wobei die erste Naht 431 die Kontur des Positionierabschnitts 112 festlegt, d.h. das befüllbare Volumen des Positionierabschnitts 112 definiert. Die Überströmöffnung 2 befindet sich entsprechend innerhalb der durch die Naht 431 definierten Kontur des Positionierabschnitts 112. Demnach wird der Positionierabschnitt 112 durch die innere Lage 43 und die erste, vordere Lage 41 gebildet, so dass er sich dem zu schützenden Fahrzeuginsassen zugewandt erstreckt.

Über die Naht 512 ist gleichzeitig auch die innere Lage 43 mit der zweiten äußeren Lage 42 und mit der Thoraxkammerlage 52 verbunden, wobei die Naht 512 insbesondere ein dem Basisbereich 111 der Thoraxkammer 11 zugewandtes Ende des Positionierabschnittes 112 definiert.

Die innere Gassacklage 43 erstreckt sich über die durch die Naht 431 definierte Kontur hinaus und ist über eine bogenförmige zweite Naht 432, die ähnlich einem Kreissegment verläuft, mit der zweiten äußeren Gassacklage 42 der Kopfkammer 12 verbunden. Zwischen den beiden Nähten 431, 432 entsteht damit ein Abschnitt 44, der als Fangband wirkt und eine Dicke (bezogen auf den aufgeblasenen Zustand) der Kopfkammer 12 festlegt.

Gleichzeitig könnte die zweite Naht 432 als Diffusorstruktur wirken, gegen die ein durch die Durchgangsöffnung 2 in die Kopfkammer 12 einströmender Gasstrom zumindest teilweise prallt und sich in zwei Gasströme aufteilt, die in einander entgegengesetzten Richtungen entlang der zweiten Naht 432 weiter in die Kopfkammer 12 einströmen (insbesondere in ihren vorderen und hinteren Abschnitt 123, 124). Die äußeren Gassacklagen 41, 42 und die Thorax-Gassacklagen 51, 52 sind zudem jeweils über Umfangsnähte 45 bzw. 53 miteinander verbunden.

Denkbar ist natürlich auch, dass die innere Lage 42 über die erste Naht 431 mit der zweiten, hinteren Gassacklage 42 verbunden ist (und entsprechend über die zweite Naht 432 mit der ersten, vorderen Gassacklage 41), so dass sich der Positionierabschnitt 112 dem zu schützenden Fahrzeuginsassen abgewandt erstreckt.

Im Übergangsbereich zwischen dem Basisabschnitt 111 der Thoraxkammer 11 und der Kopfkammer 12 weist der Gassack 1 eine nach vorne weisende Einbuchtung 13 auf.

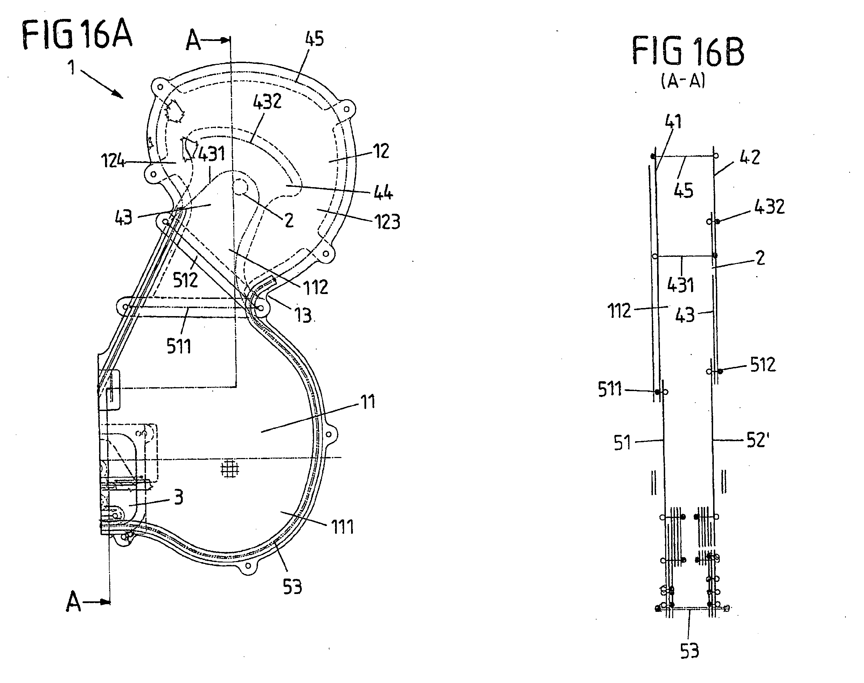

Die Figuren 16A, 16B beziehen sich auf eine Weiterbildung der Figuren 15A, 15B, wobei der prinzipielle Aufbau des Gassacks demjenigen des Gassacks der Figuren 15A, 15B entspricht.

Im Unterschied zu den Fig. 15A, 15B ist die innere Gassacklage 43, die zusammen mit der ersten äußeren Gassacklage 41 der Kopfkammer 12 den Positionierabschnitt 112 bildet, nicht als separate Gassacklage ausgebildet, sondern als Abschnitt einer einstückigen Gassacklage 52', die mit einem weiteren Abschnitt gleichzeitig die äußere Thorax-Gassacklage 52 bildet.

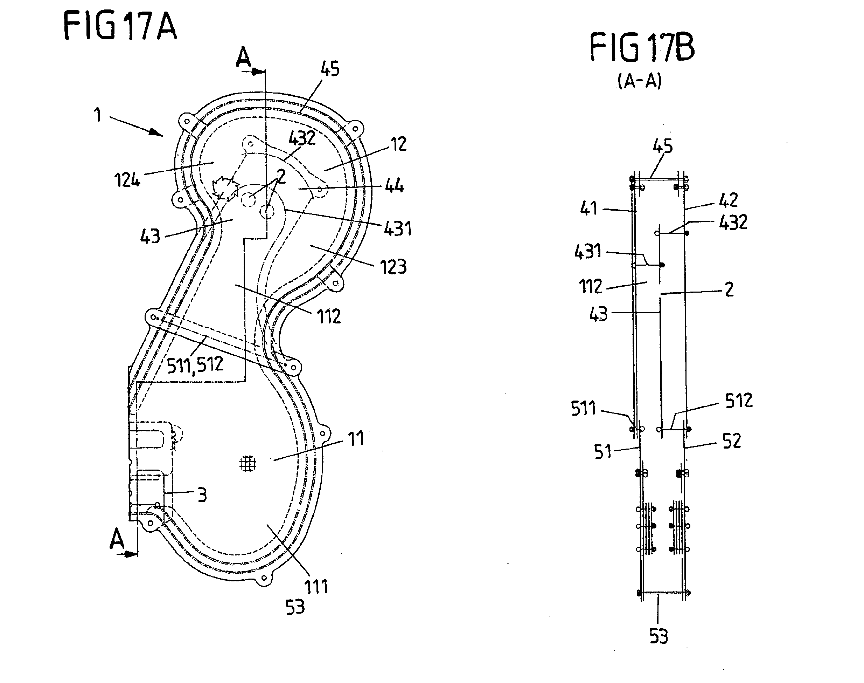

Die Fig. 17A, 17B betreffen eine weitere Variante des erfindungsgemäßen Gassacks, wonach der Positionierabschnitt 112 insbesondere zwei Durchgangsöffnungen 2 aufweist. Zudem sind die äußeren Gassacklage 41, 42 der Kopfkammer 12 über zwei im Wesentlichen parallel zueinander verlaufende Nähte 511, 512 mit den Thoraxkammer-Gassacklagen 51, 52 verbunden.

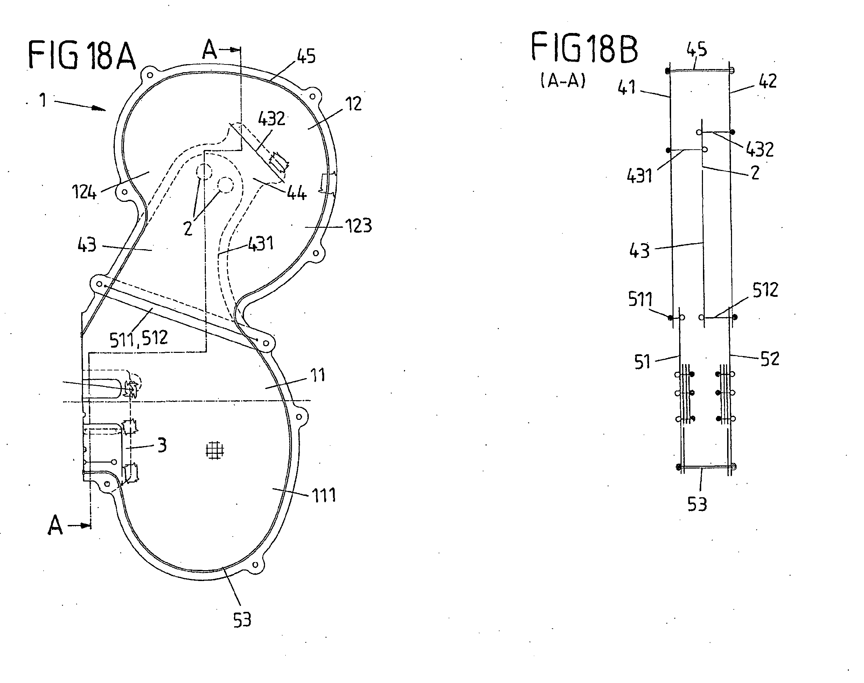

Gemäß den Fig. 18A, 18B weist der Gassack 1 insbesondere eine geradlinig verlaufenden zweite, obere Naht 432 und eine innere Gassacklage 43 mit einem anders gestalteten oberen Ende auf. Der erfindungsgemäße Gassack ist natürlich nicht auf einen bestimmten Verlauf der Naht 432 oder eine bestimmte Geometrie des Positionierabschnitts 112 beschränkt. Vielmehr wird der Verlauf der oberen Naht 432 z.B. in Abhängigkeit von einem gewünschten Entfaltungsverhalten in Bezug auf die Kopfkammer 12 gestaltet.

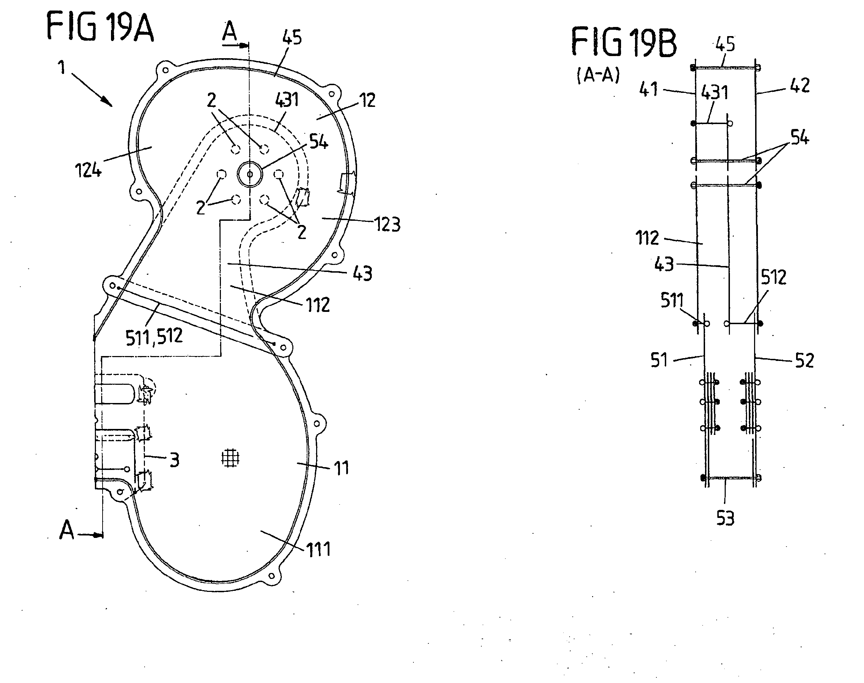

Nach der in den Fig. 19A, 19B gezeigten Ausgestaltung weist der erfindungsgemäße Gassack 1 eine Mehrzahl entlang einer gedachten Kreislinie angeordneter Überströmöffnungen 2 auf (analog zur Fig. 7). Die Überströmöffnungen 2 umlaufen einen zentralen, kreisförmigen Abnäher 54, mit dem die Geometrie der aufgeblasenen Kopfkammer beeinflusst wird. Des Weiteren weist der Gassack 1 keine obere Naht 432 auf.

Es wird darauf hingewiesen, dass Elemente der vorstehend erläuterten Ausführungsbeispiele natürlich auch in Kombination miteinander verwendet werden können. So können z.B. die in den Fig. 15 bis 19 dargestellten Ausführungsbeispiele zusätzlich eine Abströmöffnung gemäß Fig. 14 oder eine weitere Überströmöffnung gemäß Fig. 12 umfassen.

### Bezugszeichenliste

- 1: Gassack
- 2, 2': Überströmöffnung
- 3: Gasgeneratoranordnung
- 5: Abströmöffnung
- 11: Thoraxkammer
- 12: Kopfkammer
- 13: Einbuchtung
- 41: erste äußere Gassacklage Kopfkammer
- 42: zweite äußere Gassacklage Kopfkammer
- 43: innere Gassacklage
- 44: Abschnitt
- 45: Umfangsnaht
- 51: erste Thorax-Gassacklage
- 52: zweite Thorax-Gassacklage
- 52': einstückige Gassacklage
- 53: Umfangsnaht
- 54: Abnäher
- 111: Basisabschnitt
- 112: Positionierabschnitt
- 123: erster Abschnitt Kopfkammer
- 124: zweiter Abschnitt Kopfkammer
- 411: Schutzlage
- 431: erste Naht
- 432: zweite Naht
- 511, 512: Naht

## Patentansprüche

1. Gassack für ein Fahrzeuginsassen-Rückhaltesystem, mit
- einer Thoraxkammer (11) zum Schutz der Thoraxregion des Fahrzeuginsassen;
- einer Kopfkammer (12) zum Schutz des Kopfes des Fahrzeuginsassen;
- wobei die Thoraxkammer (11) einen Positionierabschnitt (112) aufweist, über den Gas aus der Thoraxkammer (11) in die Kopfkammer (12) überströmen kann,
- wobei der Positionierabschnitt (112) so ausgebildet und angeordnet ist, dass er bei einem Aufblasen des Gassacks (1) vor der Kopfkammer (12) mit Gas befüllt wird und sich so entfaltet, dass er die Kopfkammer (12) an etwaigen Hindernissen vorbei in eine Schutzposition bewegen kann,
**dadurch gekennzeichnet,**
**dass** die Kopfkammer (12) durch eine erste und eine zweite äußere Gassacklage (41, 42) begrenzt ist, wobei der Positionierabschnitt (112) durch eine (41) dieser äußeren Gassacklagen und eine innere Gassacklage (43) gebildet ist.

2. Gassack nach Anspruch 1, **dadurch gekennzeichnet, dass** sich der Positionierabschnitt (112) in die Kopfkammer (12) hinein erstreckt.

3. Gassack nach Anspruch 1 oder 2, **dadurch gekennzeichnet, dass** die Kopfkammer (12) einen Abschnitt (123) aufweist, der sich im aufgeblasenen Zustand des Gassacks (1) - in Vorwärtsfahrtrichtung betrachtet - vor dem Positionierabschnitt (112) befindet und/oder einen Abschnitt (124), der sich hinter dem Positionierabschnitt (112) befindet.

4. Gassack nach Anspruch 1, **dadurch gekennzeichnet, dass** der Positionierabschnitt (112) an die Kopfkammer (12) angrenzt.

5. Gassack nach einem der vorhergehenden Ansprüche, **dadurch gekennzeichnet, dass** der Positionierabschnitt (112) im Bereich der Kopfkammer (12) mindestens eine Überströmöffnung (2) aufweist, über die Gas in die Kopfkammer (12) übertreten kann.

6. Gassack nach einem der vorhergehenden Ansprüche, **dadurch gekennzeichnet, dass** der Positionierabschnitt (112) an einen Basisabschnitt (111) der Thoraxkammer (11) angrenzt, in dem eine Gasgeneratoranordnung (3) zum Aufblasen des Gassacks (1) angeordnet ist.

7. Gassack nach Anspruch 6, **dadurch gekennzeichnet, dass** der Positionierabschnitt (112) einen kleineren Durchmesser aufweist als der Basisabschnitt (111).

8. Gassack nach einem der vorhergehenden Ansprüche, **dadurch gekennzeichnet, dass** der Positionierabschnitt (112) eine im Wesentlichen längserstreckte Gestalt aufweist.

9. Gassack nach einem der vorhergehenden Ansprüche, **dadurch gekennzeichnet, dass** der Positionierabschnitt (112) so ausgebildet ist, dass er im aufgeblasenen und im Fahrzeug montierten Zustand des Gassacks (1) mit der Fahrzeughöhenrichtung einem Winkel zwischen 0° und 90°, insbesondere zwischen 0° und 45°, einschließt.

10. Gassack nach einem der vorhergehenden Ansprüche, **dadurch gekennzeichnet, dass** die innere Gassacklage (43) durch einen ersten Abschnitt einer einstückigen Gassacklage gebildet ist, die mit einem zweiten Abschnitt die Thoraxkammer (11) begrenzt.

11. Gassack nach einem der vorhergehenden Ansprüche, **dadurch gekennzeichnet, dass** die innere Gassacklage (43) über mindestens eine erste Naht (431) mit der ersten äußeren Gassacklage (41) und über eine zweite Naht (432) mit der zweiten äußeren Gassacklage (42) verbunden ist.

12. Gassack nach Anspruch 11, **dadurch gekennzeichnet, dass** die erste Naht (431) die Kontur des Positionierabschnitts (112) definiert.

13. Gassack nach Anspruch 11 oder 12, **dadurch gekennzeichnet, dass** die zweite Naht (432) als Diffusor für einen aus dem Positionierabschnitt (112) in die Kopfkammer (12) übertretenden Gasstrom dient.

## Claims

1. Airbag for a vehicle occupant restraining system, with
- a thorax chamber (11) for protecting the thorax region of the vehicle occupant;
- a head chamber (12) for protecting the head of the vehicle occupant;
- wherein the thorax chamber (11) has a positioning portion (112) over which gas from the thorax chamber (11) can flow into the head chamber (12),
- wherein the positioning portion (112) is designed and arranged in such a way that, when the airbag (1) is inflated, said positioning portion is filled with gas upstream of the head chamber (12) and is deployed in such a manner that it can move the head chamber (12) past possible obstacles into a protective position,
**characterized**
**in that** the head chamber (12) is bounded by a first and a second outer airbag layer (41, 42), wherein the positioning portion (112) is formed by one (41) of said outer airbag layers and an inner airbag layer (43).

2. Airbag according to Claim 1, **characterized in that** the positioning portion (112) extends into the head chamber (12).

3. Airbag according to Claim 1 or 2, **characterized in that** the head chamber (12) has a portion (123) which, in the inflated state of the airbag (1), is located, as viewed in the forwards direction of travel, in front of the positioning portion (112), and/or has a portion (124) which is located behind the positioning portion (112).

4. Airbag according to Claim 1, **characterized in that** the positioning portion (112) is adjacent to the head chamber (12).

5. Airbag according to one of the preceding claims, **characterized in that** the positioning portion (112) has, in the region of the head chamber (12), at least one overflow opening (2) via which gas can pass into the head chamber (12).

6. Airbag according to one of the preceding claims, **characterized in that** the positioning portion (112) is adjacent to a base portion (111) of the thorax chamber (11) in which base portion a gas generator arrangement (3) for inflating the airbag (1) is arranged.

7. Airbag according to Claim 6, **characterized in that** the positioning portion (112) has a smaller diameter than the base portion (111).

8. Airbag according to one of the preceding claims, **characterized in that** the positioning portion (112) has a substantially longitudinally extended design.

9. Airbag according to one of the preceding claims, **characterized in that** the positioning portion (112) is designed in such a manner that, in the state of the airbag (1) inflated and mounted in the vehicle, said positioning portion encloses an angle of between 0° and 90°, in particular between 0° and 45°, with the vertical direction of the vehicle.

10. Airbag according to one of the preceding claims, **characterized in that** the inner airbag layer (43) is formed by a first portion of a single-piece airbag layer which, with a second portion, bounds the thorax chamber (11).

11. Airbag according to one of the preceding claims, **characterized in that** the inner airbag layer (43) is connected to the first outer airbag layer (41) via at least one first seam (431) and to the second outer airbag layer (42) via a second seam (432).

12. Airbag according to Claim 11, **characterized in that** the first seam (431) defines the contour of the positioning portion (112).

13. Airbag according to Claim 11 or 12, **characterized in that** the second seam (432) serves as a diffuser for a stream of gas passing from the positioning portion (112) into the head chamber (12).

## Revendications

1. Airbag pour un système de retenue pour occupant d'un véhicule, comprenant :
- une chambre thoracique (11) pour la protection de la région du thorax de l'occupant du véhicule ;
- une chambre de tête (12) pour la protection de la tête de l'occupant du véhicule ;
- la chambre thoracique (11) présentant une portion de positionnement (112) par le biais de laquelle du gaz peut déborder hors de la chambre thoracique (11) dans la chambre de tête (12),
- la portion de positionnement (112) étant réalisée et disposée de telle sorte qu'elle soit remplie de gaz avant la chambre de tête (12) lors d'un gonflage de l'airbag (1) et qu'elle se déploie de telle sorte qu'elle puisse déplacer la chambre de tête (12) devant les obstacles éventuels dans une position de protection,
**caractérisé en ce que**
la chambre de tête (12) est limitée par une première et une deuxième couche d'airbag extérieure (41, 42), la portion de positionnement (112) étant formée par l'une (41) de ces couches d'airbag extérieures et par une couche d'airbag intérieure (43).

2. Airbag selon la revendication 1, **caractérisé en ce que** la portion de positionnement (112) s'étend à l'intérieur de la chambre de tête (12).

3. Airbag selon la revendication 1 ou 2, **caractérisé en ce que** la chambre de tête (12) présente une portion (123) qui, considérée dans la direction de conduite en avant, se trouve avant la portion de positionnement (112) dans l'état gonflé de l'airbag (1), et/ou une portion (124) qui se trouve derrière la portion de positionnement (112).

4. Airbag selon la revendication 1, **caractérisé en ce que** la portion de positionnement (112) est adjacente à la chambre de tête (12).

5. Airbag selon l'une quelconque des revendications précédentes, **caractérisé en ce que** la portion de positionnement (112) présente, dans la région de la chambre de tête (12), au moins une ouverture de débordement (2) par le biais de laquelle le gaz peut passer dans la chambre de tête (12).

6. Airbag selon l'une quelconque des revendications précédentes, **caractérisé en ce que** la portion de positionnement (112) est adjacente à une portion de base (111) de la chambre thoracique (11), dans laquelle est disposé un agencement de générateur de gaz (3) pour gonfler l'airbag (1).

7. Airbag selon la revendication 6, **caractérisé en ce que** la portion de positionnement (112) présente un plus petit diamètre que la portion de base (111).

8. Airbag selon l'une quelconque des revendications précédentes, **caractérisé en ce que** la portion de positionnement (112) présente une configuration essentiellement allongée.

9. Airbag selon l'une quelconque des revendications précédentes, **caractérisé en ce que** la portion de positionnement (112) est réalisée de telle sorte que dans l'état de l'airbag (1) gonflé et monté dans le véhicule, elle forme avec la direction en hauteur du véhicule un angle compris entre 0° et 90°, en particulier compris entre 0° et 45°.

10. Airbag selon l'une quelconque des revendications précédentes, **caractérisé en ce que** la couche d'airbag intérieure (43) est formée par une première portion d'une couche d'airbag d'une seule pièce, qui limite avec une deuxième portion la chambre thoracique (11).

11. Airbag selon l'une quelconque des revendications précédentes, **caractérisé en ce que** la couche d'airbag intérieure (43) est connectée par le biais d'au moins une première couture (431) à la première couche d'airbag extérieure (41) et par le biais d'une deuxième couture (432) à la deuxième couche d'airbag extérieure (42).

12. Airbag selon la revendication 11, **caractérisé en ce que** la première couture (431) définit le contour de la portion de positionnement (112).

13. Airbag selon la revendication 11 ou 12, **caractérisé en ce que** la deuxième couture (432) sert de diffuseur pour un flux de gaz dépassant de la portion de positionnement (112) dans la chambre de tête (12).
